**Europäisches Patentamt**

**European Patent Office**

**Office européen des brevets**

(11) Publication number:

**0 178 849**
**B1**

## (12) EUROPEAN PATENT SPECIFICATION

(45) Date of publication of patent specification: **16.01.91**

(21) Application number: **85307256.9**

(22) Date of filing: **10.10.85**

(51) Int. Cl.⁵: **G 01 N 23/207, G 01 N 23/08**

(54) Method of analyzing composition of optical fiber base material to be measured by radioactive rays.

(30) Priority: **13.10.84 JP 214580/84**

(43) Date of publication of application:
**23.04.86 Bulletin 86/17**

(45) Publication of the grant of the patent:
**16.01.91 Bulletin 91/03**

(84) Designated Contracting States:
**DE FR GB**

(56) References cited:
**DE-A-3 125 714**
**FR-A-2 169 617**
**FR-A-2 191 737**

**JOURNAL OF APPLIED PHYSICS, vol. 52, no. 12, December 1981, pages 7129-7135, New York, US; R.G. ROSEMEIER et al.: "Asymmetric crystal topography of diacetylene and polydiacetylene macroscopic single crystals"**

**IBM TECHNICAL DISCLOSURE BULLETIN, vol. 17, no. 5, October 1974, pages 1394-1395; A. BOHG et al.: "Measuring tensions in thin films"**

(73) Proprietor: **THE FURUKAWA ELECTRIC CO., LTD.**
**6-1, 2-chome, Marunouchi Chiyoda-ku**
**Tokyo (JP)**

(72) Inventor: **Tamura, Junichi c/o Chiba Works**
**Furukawa Electric Co., Ltd. 6, Yahata-kaigandori**
**Ichihara-shi Chiba-ken (JP)**
Inventor: **Hara, Ryoichi c/o Chiba Works**
**Furukawa Electric Co., Ltd. 6, Yahata-kaigandori**
**Ichihara-shi Chiba-ken (JP)**
Inventor: **Abe, Fumihiko c/o Chiba Works**
**Furukawa Electric Co., Ltd. 6, Yahata-kaigandori**
**Ichihara-shi Chiba-ken (JP)**
Inventor: **Koaizawa, Hisashi c/o Chiba Works**
**Furukawa Electric Co., Ltd. 6, Yahata-kaigandori**
**Ichihara-shi Chiba-ken (JP)**

(74) Representative: **Gibson, Stewart Harry et al**
**URQUHART-DYKES & LORD Business**
**Technology Centre Senghennydd Road**
**Cardiff CF2 4AY South Wales (GB)**

**Description**

This invention relates to a method of analyzing the composition of an optical fiber base material by non-destructive means utilizing X-rays or radioactive rays.

It is known, in order to determine in non-destructive manner the ratio of elements contained in a substance which includes a plurality of elements and the absolute amounts of those elements, to use a method which comprises irradiating the substance with a plurality of monochromatic X-rays and measuring the intensities of the transmitted X-rays using a predetermined detecting system.

In addition, it is known to use a detector having semiconductor elements of Ge or Si.

In the abovementioned method using X-rays, the energy of the X-rays is predetermined. Thus, the energy of the generated X-rays cannot be freely varied, and the thickness of the substance to be measured and the accurate analysis responsive to the constituent elements cannot be selected. The detecting system generally employs a detector made of semi-conductor elements of Ge and the like, but Ge detectors are expensive, and must be used while cooling with liquefied nitrogen. Thus, the maintenance and the management of the system have difficulties, although the resolution of energy in the received rays is excellent.

Accordingly, an object of this invention is to provide a method of analyzing the composition of an optical fiber base material which can eliminate the aforementioned drawbacks and disadvantages and can accurately and economically analyze the composition in respect of its constituent elements and its thickness.

In accordance with this invention there is provided a method of analyzing the composition of an optical fiber base material, comprising irradiating the base material (1) with X-rays or radioactive rays from a radiation generator (4), exposing a plurality of single-crystals (6a, 6b) to the rays transmitted through said base material to produce by diffraction respective radiation beams of specific energies, and using a radiation detector (9) to measure the intensities of the respective radiation beams.

In this method, the radiation beams produced by diffraction in the single crystals are of specific energies. Thus, the energy of each beam to be produced in response to the thickness of the base material and its constituent elements can be freely altered. Therefore, the analyzing accuracy when measuring and analyzing the intensities of the radiation beams by the radiation detector can be enhanced, and the detector need not comprise semiconductor detectors of Ge or Si, but may comprise inexpensive and readily handled scintillation counter tubes. Accordingly difficulties in handling can be eliminated and the detector is inexpensive.

An embodiment of this invention will now be described by way of example only and with reference to the accompanying drawings, in which:

Figs. 1(a) and 1(b) are explanatory views schematically showing various optical fiber base materials to be analyzed by a method in accordance with the present invention;

Fig. 2 is an explanatory view schematically showing an apparatus for carrying out a method in accordance with the present invention;

Fig. 3(a) and 3(b) are explanatory views showing crystals satisfying Laue and Bragg conditions for producing radiation beams of specific energies by diffraction from incident X-rays; and

Fig. 4 is a distribution curve of the densities of elements in the base material to be analyzed.

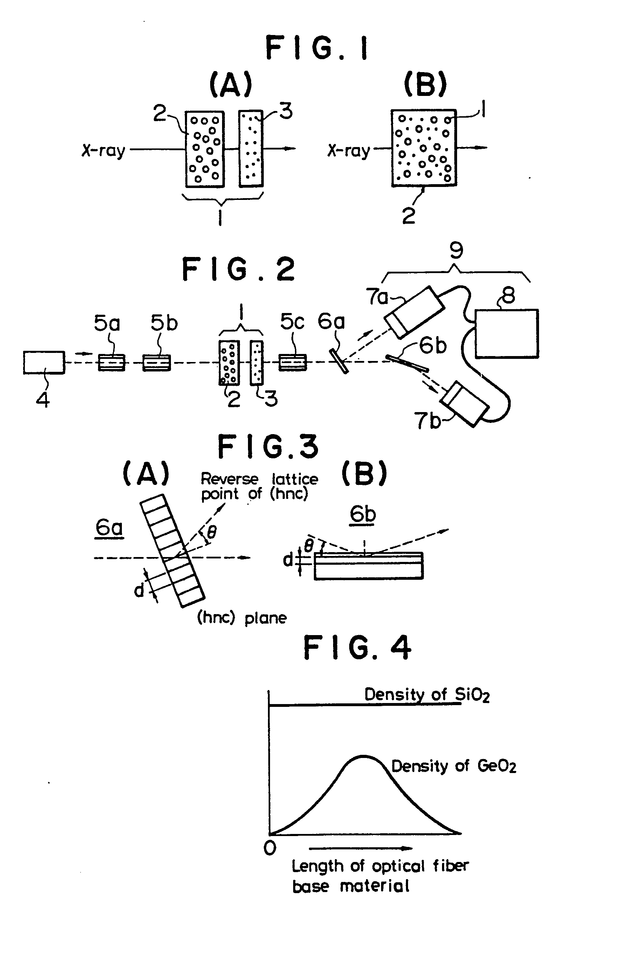

Figs. 1(a) and 1(b) show respective optical fiber base materials to be analyzed according to the method of this invention. In Fig. 1(a), a substance 2 made of one element and a substance 3 made of a different element are aligned adjacent to each other in the base material 1 to be analyzed, and in Fig. 1(b), the base material 1 comprises a plurality of elements.

Fig. 2 shows an embodiment of apparatus for carrying out a method of analyzing the composition of optical fiber base material using radioactive rays or X-rays.

In Fig. 2, reference numeral 4 designates a radiation generator, which, for example comprises an X-ray generator.

Reference numerals 5a, 5b and 5c denote collimators, and reference numerals 6a, and 6b denote single-crystals.

Reference numerals 7a and 7b designate detectors comprising scintillation counter tubes which, for example, employ NaI as a scintillator, numeral 8 designates a multichannel type peak analyzer. A radiation detector 9 is formed by connecting the detectors 7a, 7b to the analyzer 8.

The scintillation counter tubes 7a and 7b are not limited to those which employ NaI as the scintillator, but may use CsI(T1), KI(T1), or LiI(T1) as the scintillator. The peak analyzer 8 is not limited to the multichannel type, but may employ single channel peak analyzers in combination.

In Fig. 2, when the composition of the base material 1 of Fig. 1(a) is to be analyzed, the base material 1 to be measured is disposed between the collimators 5b and 5c.

After the radioactive rays or X-rays from the radiation generator 4 are transmitted through the collimators 5a, 5b, the rays are incident on the base material 1 to be analyzed, the radioactive or X-rays transmitted through the base material 1 i.e. the transmitted rays are incident upon the single crystals 6a, 6b, and the diffracted beams are then incident on the detectors 7a, 7b.

The single-crystal 6a is disposed to satisfy the Laue conditions in respect of the beam of specific energy which it produces by diffraction, and the other single crystal 6b is disposed at an angle to satisfy the Bragg conditions in respect of the beam of specific energy which it produces by diffraction.

Instead of satisfying Laue and Bragg conditions respectively, they may satisfy respectively Laue-Lane, Bragg-Bragg or Bragg-Laue conditions.

The energy spectral analyis by Laue and Bragg respectively is shown in Figs. 3(a) and 3(b).

In case of Laue conditions as shown in Fig. 3(a), the rays incident on the crystal 6a are diffracted in the lattice plane in the crystal, and the diffracted beam of specific energy emerges from the surface different from the incident wave side.

In any case, when the distance between the lattice is represented by d, the energy E of the beam emerging from the crystals 6a or 6b is as below.

$$E = nhc/2d \sin \theta$$

In the above equation n represents an integral number, h represents planck's constant, c represents the velocity of a light, and $\theta$ represents an angle formed between emerging rays and the lattice plane.

Therefore, radiation beams having desired energies can be produced by altering the angle $\theta$.

As described above, the radiation beams incident on the detectors 7a, 7b are irradiated to the scintillator (NaI) of the detectors 7a, 7b, lose their energy and emit photons. These photons are amplified by a photoelectric multiplier, introduced into the multichannel peak analyzer 8, and can be analyzed at the peak to give the intensity distribution of the incident radiation beams.

As a simple example, a method of obtaining the mass thicknesses of the substances 2 and 3 in the base material 1 will be described in detail.

The mass thicknesses are values obtained by the product of the thickness of the base material (the size of the direction for transmitting the radioactive rays) and the density of the element in the thicknesswise direction, thereby clarifying the ratio of the compositions and the absolute weights of the constituent elements in the base material to be analyzed.

In the abovementioned example, the intensity of the rays incident on the crystals is represented by I0, the energies of the beams produced by diffraction in crystals 6a, 6b are E1, E2, the intensities of the emerging beams are I1, I2, the absorption coefficients of the substances 2, 3 to the energies E1, E2 are MA1, MA2, MB1, MB2, and the thickness of the substances 2, 3 in the radioactive ray transmitting direction are IA, IB. Then, the following equations are obtained.

$$I1 = I0e^{-(MA1/\rho A \cdot \rho AIA + MB1/\rho B \cdot \rho BIB)}$$

$$I2 = I0e^{-(MA2/\rho A \cdot \rho AIA + MB2/\rho B \cdot \rho BIB)}$$

When the mass thickness ($\rho I$) is obtained from these equations, the following equations will be gained.

$$\rho BIB = \cfrac{(MA1H2 - MA2H1)\rho B}{\begin{vmatrix} MA1 & MB1 \\ MA2 & MB2 \end{vmatrix}}$$

$$\rho AIA = \cfrac{(MA1H1 - MA2H2)\rho A}{\begin{vmatrix} MA1 & MB1 \\ MA2 & MB2 \end{vmatrix}}$$

Where

$$H1 = \ln\frac{I0}{I1},$$

$$H2 = \ln\frac{I0}{I2},$$

and $\rho A$, $\rho B$ are the densities of the substances 2 and 3.

The above method can obtain the mass thickness of the respective elements of the base material to be measured containing two types of elements as shown in Fig. 4 such as, for example, $SiO_2$ and $GeO_2$.

The substance or base material to be analyzed may be circular, polygonal or any other shape in cross section.

For example, in a cylinder or a cylindrical post formed of two elements, in which the mass thicknesses of the respective elements are symmetrically distributed with respect to the central axis, the substance to be analyzed and the direction of irradiating rays are crossed perpendicularly, and the substance to be analyzed is inched in the direction perpendicular to the irradiating direction, or the radiation generator and the radiation detector are inched perpendicular to that direction, so that the substance is scanned from one side end to the other with the incident radiation.

In this case, the intensity of the rays transmitted through the irradiating position is sequentially detected by the detector (scintillation counter tube) in the same manner as the abovementioned method, thereby obtaining the mass thicknesses of the constituent elements with respect to the lateral direction of the substance.

According to this invention as described above, the rays transmitted through the substance to be analyzed are incident upon a plurality of single-crystals to produce a plurality of radiation beams of specific energies. Thus, the energies of the rays to be produced by diffraction can be freely altered in response to the thickness of the substance to be measured and its constituent elements, and the analyzing accuracy of the method can be accordingly enhanced. The detector may comprise scintillation counter tubes which are inexpensive and easy to handle, thereby providing ready handling and economy.

## Claims

1. A method of analyzing the composition of an optical fiber base material (1), comprising irradiating the base material (1) with X-rays or radioactive rays from a radiation generator (4), exposing a plurality of single-crystals (6a, 6b) to the rays transmitted through said base material to produce by diffraction respective radiation beams of specific energies, and using a radiation detector (9) to measure the intensities of the respective radiation beams.

2. The method according to Claim 1, wherein the base material (1) is scanned with the X-rays or radioactive rays by moving the radiation generator (4) with respect to the base material or by moving the base material with respect to the radiation generator.

3. The method according to Claim 1, wherein the radiation detector (9) includes scintillation counter tubes (7a, 7b) receiving the radiation beams the intensities of which are being measured.

4. The method according to Claim 3, wherein said scintillation counter tubes (7a, 7b) employ NaI as a scintillator.

5. The method according to Claim 3, wherein said scintillation counter tubes (7a, 7b) employ CsI(T1), KI(T1), or LiI(T1) as the scintillator.

6. The method according to claim 1, wherein one said single-crystal is disposed to satisfy the Laue conditions in respect of the radiation beam which it produces, and another single-crystal is disposed at an angle to satisfy the Bragg conditions in respect of the radiation beam which it produces.

7. The method according to claim 1, wherein two radiation beams are produced by single-crystals satisfying Laue and Bragg, Laue-Laue, Bragg-Bragg and Bragg-Laue conditions.

## Patentansprüche

1. Verfahren zum Analysieren der Zusammensetzung eines Grundmaterials (1) für optische Fasern, das die Schritte aufweist, das Grundmaterial (1) mit Röntgenstrahlen oder radioaktiven Strahlen von einem Strahlungsgenerator (4) zu bestrahlen, eine Vielzahl von Einkristallen (6a, 6b) den Strahlen auszusetzen, die durch das Grundmaterial hindurchgegangen sind, um durch Beugung entsprechende Strahlen von Strahlung von bestimmten Energien zu erzeugen, und einen Strahlungsdetektor (9) zum Messen der Intensitäten der entsprechenden Stahlen der Strahlung zu verwenden.

2. Verfahren nach Anspruch 1, bei dem das Grundmaterial (1) mit den Röntgenstrahlen oder radioaktiven Strahlen abgetastet wird, indem der Strahlungsgenerator (4) in bezug auf das Grundmaterial oder indem das Grundmaterial in bezug auf den Strahlungsgenerator bewegt wird.

3. Verfahren nach Anspruch 1, bei dem der Strahlungsdetektor (9) Scintillationszählerröhren (7a, 7b) aufweist, die die Strahlen von Strahlungen empfangen, deren Intensitäten gemessen werden.

4. Verfahren nach Anspruch 3, bei dem die Scintillationszählerröhren (7a, 7b) NaI als Scintillator verwenden.

5. Verfahren nach Anspruch 3, bei dem die Scintillationszählerröhren (7a, 7b) CsI(T1), KI(T1) oder LiI(T1) als Scintillator verwenden.

6. Verfahren nach Anspruch 1, bei dem der eine Einkristall so angeordnet ist, daß er in bezug auf den Strahl von Strahlung, den er erzeugt, die Laue-Bedingungen erfüllt, und bei dem ein anderer Einkristall unter einem Winkel angeordnet ist, daß er die Bragg-Bedingungen in bezug auf den Strahl von Strahlung erfüllt, den er erzeugt.

7. Verfahren nach Anspruch 1, bei dem zwei Strahlen von Strahlung durch Einkristalle erzeugt werden, die Laue- und Bragg-Bedingungen, Laue-Laue-Bedingungen, Bragg-Bragg-Bedingungen und Bragg-Laue-Bedingungen erfüllen.

## Revendications

1. Procédé pour l'analyse de la composition d'un matériau de base (1) pour fibre optique, selon lequel on irradie le matériau de base (1) par des rayons X ou des rayons radio-actifs en provenance d'un

**EP  0 178 849  B1**

générateur de radiation (4), expose une pluralité de cristaux uniques (6a, 6b) aux rayons transmis à travers le matériau de base pour produire par diffraction respective des faisceaux de radiation d'énergies spécifiques, et utilise un détecteur de radiation (9) pour mesurer les intensités des faisceaux de radiation respectif.

2. Procédé selon la revendication 1, selon lequel le matériau de base (1) est exploré par des rayons X ou des rayons radio-actifs en déplaçant le générateur de radiation (4) par rapport au matériau de base ou en déplaçant le matériau de base par rapport au générateur de radiation.

3. Procédé selon la revendication 1, selon lequel le détecteur de radiation (9) comporte des tubes compteurs de scintillations (7a, 7b) recevant les faisceaux de radiation dont les intensités doivent être mesurées.

4. Procédé selon la revendication 3, selon lequel les tubes compteurs de scintillations (7a, 7b) utilisent du NaI comme scintillateur.

5. Procédé selon la revendication 3, selon lequel les tubes compteurs de scintillations (7a, 7b) utilisent du CsI(T1), KI(T1), ou LiI(T1) comme scintillateur.

6. Procédé selon la revendication 1, selon lequel le cristal unique précité est disposé pour satisfaire aux conditions de Laue par rapport aux faisceaux de radiation qu'il produit, et un autre cristal unique est disposé à un angle pour satisfaire aux conditions de Bragg par rapport aux faisceaux de radiation qu'il produit.

7. Procédé selon la revendication 1, selon lequel deux faisceaux de radiation sont produits par des cristaux uniques satisfaisant aux conditions Laue et Bragg, de Laue-Laue, de Bragg-Bragg et de Bragg-Laue.

# FIG. 1

## (A)

2     3

X-ray ⟶ ⟶

1

## (B)

1

X-ray ⟶ ⟶

2

# FIG. 2

9

7a    8

5a   5b    1    5c   6a

6b

4      2   3

7b

# FIG.3

## (A)

Reverse lattice point of (hnc)

6a

θ

d

(hnc) plane

## (B)

6b

θ

d

# FIG. 4

Density of $SiO_2$

Density of $GeO_2$

0

Length of optical fiber base material